# EUROPÄISCHE PATENTANMELDUNG

(11) **EP 2 447 026 A2**
(43) Veröffentlichungstag der Anmeldung: **02.05.2012**
(21) Anmeldenummer: 11185350.3
(22) Anmeldetag: 17.10.2011
(51) Int. Cl.: B29B 11/14, B29C 49/64, B29C 49/06, B29C 49/12, B29C 49/36, B29B 11/08, B29C 45/16

(54) **Vorformling und Verfahren zum Handhaben und Verarbeiten von Vorformlingen**

(30) Priorität: 02.11.2010 DE 102010060298
(71) Anmelder: Krones AG, 93073 Neutraubling (DE)
(72) Erfinder: Knieling, Erwin, 93102 Pfatter (DE); Friedländer, Thomas, 93049 Regensburg (DE); Fischer, Sven, 93055 Regensburg (DE); Acker, Kai, 93107 Thalmassing (DE)
(74) Vertreter: Reichert, Werner Franz

(57) **Zusammenfassung**

Die Erfindung offenbart einen Vorformling (20) mit einem Körper (22), der eine innere Wandung (22i) und eine äußere Wandung (22a) definiert, und mit einer Mündung (26). Der Körper (22) besitzt eine Wandstärke (22v). Der Vorformling (20) ist mit einem Mittel (30) versehen, das ein Siegel (38) umfasst, das eine Wandstärke (38d) besitzt, die kleiner als die Wandstärke (22v) des Vorformlings (20) ist, so dass mindestens in einem Innenraum (25) des Vorformlings (20) sterile Bedingungen während der Handhabung des Vorformlings (20) aufrecht erhalten bleiben. Das Siegel (38) ist derart ausgebildet, dass es zumindest teilweise plastisch und/oder elastisch deformierbar oder brechbar ist. Die Vorformlinge (20) können zumindest mit den sterilen Bedingungen des Innenraums (25) des Vorformlings (20) von einem Erwärmungsschritt (64) an ein Blasrad (3) übergeben werden. Die Erfindung offenbart auch ein Verfahren zum Handhaben und Verarbeiten von Vorformlingen.

## Beschreibung

Die vorliegende Erfindung betrifft einen Vorformling. Der Vorformling besteht dabei aus einem Körper und einer Mündung.

Ferner betrifft die Erfindung ein Verfahren zum Handhaben und Verarbeiten von Vorformlingen, wobei der Vorformling einen Körper und eine Mündung ausgebildet hat.

Die Vorformlinge werden bisher derart hergestellt, dass deren Mündung nicht verschlossen ist. Für den Transport werden die Vorformlinge als Schüttgut verpackt und zu den Getränkeabfüllern transportiert, um die für die Abfüllung erforderlichen Kunststoffflaschen herzustellen. In der gesamten Prozesskette gibt es mehrere Möglichkeiten der Kontamination, wie z. B bei Entnahme der Vorformlinge aus den Spritzgießformen und Abkühlen der Vorformlinge in der Maschine, Sammlung, Verpackung, Lagerung, Entnahme, Zuführen der Vorformlinge zum Ofen oder bei Überführen der erwärmten Vorformlinge vom Ofen in das Blasrad der Streckblasmaschine. Die Kontamination führt zu Problemen bei der Abfüllung hinsichtlich Sterilität und Produktqualität. Es sind daher häufig zusätzliche Prozessschritte erforderlich, um die Vorformlinge bzw. die daraus hergestellten Flaschen in einem nahezu sterilen Zustand zu halten. Häufig werden zusätzliche Sterilisationsmittel, wie z.B. H₂O₂, Laser, Mikrowellen, Wärme oder Peressigsäure, eingesetzt.

Die japanische Patentanmeldung JP 10-53228 offenbart ein Herstellungsverfahren einer Getränkeflasche aus einem Vorformling. Aus dem Vorformling wird die Flasche (PET-Flasche) hergestellt. Nachdem die Flasche ausgebildet ist, wird diese zumindest am Mündungsbereich der Flasche desinfiziert. Nach dem Desinfizieren wird die Flasche mit einer Kappe verschlossen. Die Kappe wird von der Flasche erst dann abgenommen, wenn diese in den Füller gelangt. Nach dem Befüllen der Flasche mit der Flüssigkeit wird diese mit einem herkömmlichen Verschluss verschlossen.

Die deutsche Offenlegungsschrift DE 21 14 499 offenbart ein Verfahren und eine Vorrichtung zur Herstellung von sterilen Hohlkörpern. Die Hohlkörper sind mit steriler Luft gefüllt und hermetisch verschlossen. Der Vorformling wird unter Einblasen eines Gases für den gewünschten Hohlkörper aufgeblasen. Nachdem der Blasdorn vollständig aus der Form zurückgezogen worden ist, wird der Hohlkörper durch Versiegeln hermetisch geschlossen. In dem Vorformling ist während der Explosion steriles Gas eingeführt worden.

Die deutsche Offenlegungsschrift DE 24 10 979 offenbart ein Verfahren und eine Vorrichtung zum Formen und Verschließen von thermoplastischen Gefä-βen. Aus einem explodierten heißen thermoplastischen Schlauch wird ein Gefäß geformt, das mindestens mit einem Füllstutzen versehen ist. Der Stutzen endet in einem geschlossenen Kegel, um welchen herum eine Kappe angeordnet ist. Die Kappe wird dabei derart geformt, dass das thermoplastische Material an der Stelle, an welcher sie mit dem Oberteil des Stutzens zusammenkommt, vergleichsweise dünn ist. Diese Dünnwandigkeit ist vorgesehen, um ein leichtes Abbrechen der Kappe zu ermöglichen. Da die Temperatur während des Bildens des Kegels und des Gefäßes höher ist als Bakterien und andere Organismen aushalten können, ist der Thermoplast steril. Um über den Kegel Zugang zu dem Gefäß zu erlangen, muss der Kegel durchstoßen werden. Im Gebrauch kann es beispielsweise zweckmäßig sein, die den Kegel umgebende Kappe abzubrechen, dann den Kegel zu durchstoßen und daran anschließend eine flexible Leitung anzubringen.

Die japanische Patentanmeldung JP 11 16 5750 offenbart einen Vorformling und die bzgl. des Vorformlings ausgebildete Struktur der Mündung und ein entsprechendes Dichtungselement, um somit die Sterilität im Innern des Vorformlings zu gewährleisten. Das topfartig ausgebildete Verschlusselement kann dabei dichtend an der Mündung des Vorformlings angebracht werden. Mit der Innenwand der Mündung des Vorformlings wirkt ein radial umlaufender Vorsprung des Dichtelements zusammen. Durch das Einbringen des topfartigen Dichtelements in den Mündungsbereich des Vorformlings erzielt man eine gewisse Dichtwirkung, um somit die sterilen Bedingungen im Innern des Vorformlings aufrecht zu erhalten.

Die Übersetzung der europäischen Patentschrift DE 694 07 609 C2 offenbart einen Vorformling mit einem Verschluss. Der Verschluss für den Vorformling ist dabei in Form einer Kappe ausgebildet. Die Kappe stützt sich außen an der Gewindestruktur des Vorformlings ab, welche im Mündungsbereich ausgebildet ist. Ferner ragt ein Teil der Kappe in den Innenbereich des Vorformlings und stützt sich dabei an der inneren Wandung des Vorformlings in dessen Mündungsbereich ab.

Die deutsche Offenlegungsschrift DE 1 96 54 658 A1 offenbart eine Vorrichtung und ein Verfahren zur Herstellung von Behältern. Die Herstellung und Handhabung von Behältern wird ohne die Verwendung von seitlich überstehenden Stützringen ermöglicht. Es wird hierzu ein Ansatzelement vorgeschlagen, dass auch für stützringfreie Vorformlinge oder Behälter eine zuverlässige Handhabung gewährleistet. Insbesondere ist es möglich, die bisherigen Vorrichtungen zur Blasverformung und Befüllung im Wesentlichen unverändert weiter zu verwenden. Die geänderte Gestaltung der Vorformlinge und der Behälter ermöglicht somit eine Materialeinsparung und damit eine Kostenreduzierung.

Aufgabe der Erfindung ist, einen Vorformling derart zu gestalten, dass im inneren Bereich des Vorformlings sterile Bedingungen im Innenraum des Vorformlings möglichst von der Herstellung des Vorformlings bis zur Herstellung der Behälter daraus aufrechthaltbar sind.

Die obige Aufgabe wird durch einen Vorformling gelöst, der die Merkmale des Patentanspruchs 1 umfasst.

Eine weitere Aufgabe der Erfindung ist, ein Verfahren zur Handhabung und Verarbeitung von Vorformlingen derart auszugestalten, dass vom Herstellungsprozess der Vorformlinge bis zum Befüllen der aus den Vorformlingen hergestellten Behältern sterile Bedingungen gegeben sind. Zudem soll das Verfahren einfach und ökonomisch handhabbar sein.

Die obige Aufgabe wird durch ein Verfahren gelöst, das die Merkmale des Patentanspruchs 11 umfasst.

Der erfindungsgemäße Vorformling wird bevorzugt, jedoch nicht notwendigerweise, in einem Spritzgießverfahren hergestellt und bildet somit einen Körper aus, der eine innere Wandung und eine äußere Wandung definiert. Das Material der Vorformlinge besteht aus PET, PLA, PP oder weiteren Thermoplasten. Ferner ist der Vorformling mit einer Mündung versehen, an deren äußerer Wandung Gewindestrukturen ausgebildet sein können. Diese Gewindestrukturen dienen bei dem aus dem Vorformling hergestellten Behälter (Flasche) dem Aufbringen eines Verschlusses. Nach oder während des Spritzgießverfahrens ist der Vorformling erfindungsgemäß mit einem Mittel versehbar, so dass mindestens in einem Innenraum des Vorformlings sterile Bedingungen beibehalten werden können. Diese sterilen Bedingungen werden dadurch beibehalten, dass das Mittel die innere Wandung des Vorformlings erfindungsgemäß vor Rekontamination schützt. Der Schutz ist zumindest bis zu Beginn des Blasvorgangs gegeben. Es führt ebenfalls nicht zu einer Rekontamination der inneren Wandung des Behälters, wenn die sterile Membran während des Blasvorgangs die innere Wandung des Behälters berührt. Es ist ebenfalls denkbar, zumindest die Teile bzw. Flächen des Vorformlings nach dem Spritzguss zu sterilisieren, welche später von dem Mittel zur Aufrechterhaltung der Sterilität verschlossen werden, insbesondere handelt es sich bei den Teilen um einen Innenraum des Vorformlings. Die Sterilisation kann auch in einem Tauchbad erfolgen, wenn alle Flächen des Vorformlings sterilisiert werden sollen.

Bei dem Herstellungsprozess der Vorformlinge wird das Kunststoffgranulat in einer Spritzgießmaschine auf etwa 150°C erwärmt, wodurch Keime und/oder Sporen abgetötet werden. Im Laufe der weiteren Handhabung des Vorformlings kann es zu einer erneuten Kontamination des Innenraums des Vorformlings kommen. Gemäß der Erfindung wird ein Mittel vorgesehen, das ein Siegel trägt, so dass durch den Verschluss des Vorformlings sterile Bedingungen in Innenraum des Vorformlings erhaltbar sind. Hierdurch können die üblichen Sterilisationsverfahren vor der Zuführung der Vorformlinge zu einer thermischen Konditionierungseinrichtung, insbesondere zu einem Ofen, oder bei der Übergabe der Vorformlinge vom Ofen in die Streckblasmaschine vermieden werden.

Der Vorformling ist beim Herstellungsprozess mit einem Mittel verbindbar, so dass ein Siegel entsteht. In einem Innenraum des Vorformlings liegen somit sterile Bedingungen vor.

Falls das Siegel erst nach dem Herstellungsprozess aufgebracht wird, kann der der Transport des Vorformlings von der Spritzgussmaschine zur Station, welche das Siegel aufbringt, insbesondere in einem Reinraum stattfinden. Eine andere Möglichkeit ist es, den Vorformling kurz vor dem Aufbringen des Siegels zumindest bereichsweise zu sterilisieren. Solang der Vorformling mit einem Siegel versehen ist, kann ein Transport des Vorformlings auch außerhalb eines Reinraums erfolgen, um jedoch eine Kontamination der nicht versiegelten Flächen und ein Einbringen von Keimen in die Weiteren Verarbeitungsschritte zu vermeiden ist ein ständiger Transport in einem Reinraum vorteilhaft.

Allgemein ist es auch möglich, die im Vorformling enthaltene Wärme aus dem Spritzgussprozess gleich für eine Blasformung zu verwenden. Auf eine Wiedererwärmung wird in diesem Fall verzichtet. Gegebenenfalls wird der Vorformling vor seiner Blasformung noch einer thermischen Konditionierung unterworfen, um durch Abkühlen oder nur leichtem Erwärmen bestimmter Bereiche in seiner Axial- und/oder Umfangsrichtung ein Temperaturprofil zu erhalten, um den Blasprozess bzw. die Wanddickenverteilung des geblasenen Behälters besser steuern zu können.

Der Transport durch eine thermische Konditionierungseinrichtung erfolgt insbesondere mittels eines Außengreifers, um das Siegel nicht zu beschädigen. Bei einer ausreichenden Stabilität des Siegels kann dieses auch eine Fläche aufweisen, an der der Außengreifer angreifen kann. Theoretisch wäre es auch möglich, das Siegel so zu gestalten, dass es eine Innenfläche aufweist, wobei dann Innengreifer verwendet werden können, insbesondere die, die auch zum Transport von nicht versiegelten Preforms dienen.

Der Vorformling ist mit dem Mittel versehen, das ein Siegel trägt oder das selbst das Siegel ist. Das Siegel kann in Form einer Folie, einer Membran oder einer Kappe ausgebildet sein.

Bevorzugt ist das Siegel dabei derart ausgebildet, dass es eine Wandstärke besitzt, die kleiner als die Wandstärke des Vorformlings ist. Somit ist mindestens der Innenraum des Vorformlings geschützt und sterile Bedingungen sind somit durch das Siegel erhaltbar. Das Siegel selbst ist derart ausgebildet, dass es zumindest teilweise plastisch und/oder elastisch deformierbar oder brechbar ist. So kann z.B. während des Blasvorgangs eine sterile Reckstange das Siegel elastisch deformieren oder auch das Siegel brechen. Für das Mittel und das Siegel sind mehrere Ausführungsformen denkbar, wie nachfolgend beschrieben wird.

Gemäß einer Ausführungsform umfasst das Mittel einen Ring, der an der Mündung mit der äußeren Wandung des Vorformlings zusammenwirkt. Der Ring selbst trägt ein Siegel, das eine Membran ist, die somit den Innenraum des Vorformlings verschließt und dadurch die sterilen Bedingungen im Innenraum des Vorformlings aufrechterhält. Der Ring selbst kann zusätzlich mindestens ein Dichtelement aufweisen, so dass der Ring gegenüber der äußeren Wandung des Vorformlings dichtend ist und mit der äußeren Wandung des Vorformlings dichtend zusammenwirkt.

Zur Handhabung des Vorformlings kann der Ring mit mindestens einem Magneten versehen sein. Dieser Magnet im Ring wirkt mit einem entsprechenden anderen Magneten einer Verarbeitungseinheit zusammen. Somit kann der Vorformling durch eine Weiterverarbeitungseinheit transportiert werden. In einer besonderen Ausgestaltung ist ein Magnetring in den Ring des Mittels eingeschweißt. Ein entsprechender Magnet bzw. magnetischer Abschnitt kann z. B. an einem Transferstern einer Weiterverarbeitungseinheit oder am Transferstern im Übergabebereich von dem Ofen für die Vorformlinge an das Blasmodul vorgesehen sein. Durch diese besondere Ausgestaltung des Rings ist es möglich, den Vorformling unter sterilen Bedingungen zwischen den verschiedenen Verarbeitungseinheiten zu fördern. Bei dem Blasmodul kann es sich um ein kontinuierlich umlaufendes Blasrad oder um eine stationäre, taktweise arbeitende Blasstation handeln.

Gemäß einer weiteren Ausführungsform der Erfindung ist das Mittel selbst ein Siegel und in Form einer Membran ausgebildet, die auf die Mündung des Vorformlings während des Herstellungsprozesses anbringbar ist. Die Membran kann z. B. aus einem elastischen Material gebildet sein. Die elastische Membran wird dann mit einem Zweikomponenten-Spritzgießverfahren auf die Mündung des Vorformlings aufgebracht.

Eine weitere Ausführungsform der Erfindung ist, dass der Vorformling an dessen Mündung ebenfalls mit dem Mittel in Form eines Siegels versehen ist. Das Siegel hat die Form eines Doms, der die Mündung des Vorformlings verschließt. Dieser Dom kann während des Herstellungsprozesses des Vorformlings auf diesen aufgebracht werden. Insbesondere kann der Dom aus dem gleichen Material wie der Vorformling bestehen. Um den Dom auf der Mündung des Vorformlings ausbilden zu können, empfiehlt es sich, den mindestens einen Anspritzpunkt für die Herstellung des Vorformlings an der äußeren Wandung des Vorformlings vorzusehen. Die Position des mindestens einen Anspritzpunktes sollte in Bezug auf die Mündung des Vorformlings etwa knapp unterhalb der Mündung des Vorformlings vorgesehen werden. Der Dom ist plastisch deformierbar und/oder brechbar.

Eine weitere Ausführungsform für Vorformlinge, die unter sterilen Bedingungen zu Weiterverarbeitungseinheiten transportiert werden, ist, dass der Vorformling nach dessen Herstellung mit einer Hülle umgeben ist. Hier ist das Mittel ebenfalls selbst das Siegel, das in Form der Hülle ausgebildet ist. Diese Hülle umgibt den Vorformling vollständig und wird erst bei einer weiteren Bearbeitung vom Vorformling abgenommen. Ebenso ist es denkbar, dass die Hülle derart ausgestaltet ist, dass sie bereits Etikettenmaterial trägt, das während des Blasvorgangs des Vorformlings zu einem fertigen Behälter auf den Behälter aufbringbar ist. Eine weitere Möglichkeit der Ausgestaltung ist, dass ein Teil der Hülle, die den Vorformling umgibt, als eine elastische Membran ausgebildet ist, die mit der Mündung des Vorformlings verbunden ist. Der andere Teil der Hülle umgibt den Vorformling in lockerer Art und Weise und trägt das besagte Etikettenmaterial, welches während des Blasvorgangs des Behälters auf den Behälter aufbringbar ist. Die Hülle ist plastisch und/oder elastisch deformierbar oder brechbar.

Die Vorformlinge, bei denen sterile Bedingungen im Innenraum hergestellt sind und auch so beibehalten werden, können in dem erfindungsgemäßen Verfahren zum Handhaben und Weiterverarbeiten der Vorformlinge erfindungsgemäß verwendet werden. Die Vorformlinge werden mittels eines Spritzgießverfahrens hergestellt. Die Temperatur beim Spritzgießverfahren ist dabei derart hoch, dass keine Bakterien oder andere Organismen überleben können. Ferner ist durch die hohe Temperatur die Sterilität des Innenraums der Vorformlinge gegeben. In einem nächsten Schritt des Verfahrens gilt es dafür zu sorgen, dass die während des Spritzgießverfahrens erzeugten Reinraumbedingungen im Inneren des Vorformlings auch beibehalten werden. Hierzu wird in einem Applikationsschritt der Vorformling mit einem Mittel versehen, das im Innenraum des Vorformlings die Reinraumbedingungen beibehält. Der mit dem entsprechenden Mittel versehene Vorformling wird in einem Ofen erwärmt, um das Material des Vorformlings auf eine für die Verarbeitung mit einer Blasmaschine erforderliche Temperatur zu bringen. Im nächsten Schritt wird dann der erwärmte Vorformling mit den sterilen Bedingungen, die noch im Innenraum des Vorformlings herrschen, an die Blasmaschine übergeben.

Wie bereits erwähnt, ist das Mittel für die Aufrechterhaltung der Reinraumbedingungen in einer Ausführungsform eine Membran, die in einem Ring gehaltert ist. Der Ring wird nach dem Herstellen der Vorformlinge auf den Vorformling aufgesetzt, wobei der Ring an der äußeren Wandung des Vorformlings gehaltert wird.

Eine weitere Möglichkeit ist, dass eine Membran während des Herstellungsverfahrens des Vorformlings im Bereich der Mündung an den Vorformling gespritzt wird.

Nachdem die Vorformlinge aus dem Ofen mit dem verschlossenen Siegel an das Blasrad der Streckblasmaschnine übergeben wurden, wird bei der Herstellung von den Behältern aus den erwärmten Vorformlingen z.B. mit einer Reckstange der Blasmaschine das Siegel durchstoßen. Durch die Anwendung von Druckluft (steril) wird der Vorformling in den Formenträger der Blasmaschine geblasen.

Eine weitere Ausgestaltung des Verfahrens ist, dass mit der Reckstange der Blasmaschine die Membran (elastisch) gedehnt wird. Während des Herstellungsprozesses des Behälters in den Formenträger der Blasmaschine legt sich die Membran an die Innenwand des Behälters an. Die möglicherweise nicht sterile Blasluft kommt somit nicht mit der inneren Wandung des Vorformlings in Berührung. Eine Wandungsberührung durch die sterile Seite der Membran hat dabei keinen Einfluss auf die Sterilität des Behälters. Die Blasluft wird nach dem Blasvorgang über eine Entlüftungsmembran in dem Mittel abgelassen. Somit ist es möglich, die Behälter auch bis nach dem Blasvorgang steril zu halten. Bevor die Behälter an eine Füllmaschine überführt werden, wird das Mittel entfernt. Das Mittel, welches aus Ring und Membran besteht, kann einer Sterilisation und Wiederverwendung zugeführt werden.

Gemäß einer weiteren Ausführungsform kann das Mittel, welches für die sterilen Bedingungen im Inneren des Vorformlings sorgt, mittels eines Doms gebildet sein, der an der Mündung des Vorformlings während des Herstellungsprozesses des Vorformlings angebracht wird und diesen verschließt. Bevor der Blasvorgang der Vorformlinge in der Blasmaschine beginnt, wird der Dom entfernt. Das Entfernen des Doms kann z. B. mit einem Laser geschehen. Der Dom kann somit einem Recycling zugeführt werden. In einer weiteren Ausgestaltung ist es möglich, dass der Dom ebenfalls mit der Reckstange durchstoßen wird. Erst nach dem Fertigblasen des Behälters in der Blasmaschine können die überstehenden Teile des Doms mit dem Laser abgeschnitten werden.

Wie bereits erwähnt, besteht das Mittel zum Erhalt von Reinraumbedingungen im Inneren eines Vorformlings in einer Ausführungsform aus einem Ring, der eine Membran trägt. Dieser Ring wird auf den Vorformling aufgesetzt. Weder der Ring noch die Membran berührt dabei Teile der inneren Wandung des Vorformlings. Der Ring ist gegenüber der äußeren Wandung abgedichtet. Das Mittel kann bereits bei der Herstellung der Vorformlinge auf den Vorformling aufgesetzt werden. Alternativ kann das Aufsetzen des Mittels auch erst später erfolgen, z. B. bevor der Vorformling in einen Beutel oder Behälter verpackt wird, um mittels Gamma-Strahlen sterilisiert zu werden. Ebenfalls ist es denkbar, dass erst nach der Preform-Sterilisation und vor dem Streckblasen das Mittel auf den Vorformling aufgesetzt wird. Ferner ist es vorstellbar, dass das Mittel ein Maschinenelement der Blasmaschine ist und die Vorformlinge nach deren Sterilisation abdichtet und gegen Infektion schützt.

Eine erste Möglichkeit, mit der aus den Vorformlingen die Behälter hergestellt werden können, ist, dass die Membran mit der Reckstange durchstoßen wird. Bei dieser Ausgestaltung ist der Vorformling durch das Mittel bis hin zum Blasen der Flasche gegen Reinfektion geschützt. Dadurch kann auf einem hygienischen Transport, eine hygienische Lagerung, einen hygienischen Ofen und zum Teil auch auf ein hygienisches Blasrad verzichtet werden. Bevor die fertigen Behälter dem Füller zugeführt werden, muss das Mittel abgenommen werden und kann einer weiteren Aufbereitung bzw. einem Recycling zugeführt werden.

Eine weitere Möglichkeit der Herstellung von Behältern mittels der erfindungsgemäßen Vorformlinge besteht darin, dass z. B. die Membran von der Reckstange in den zu herstellenden Behälter gezogen wird. Anders als bei der zuvor beschriebenen Ausführung wird die Membran nicht durchstoßen, sondern während des Streck-Blasverfahrens mit in die Flasche gezogen. Durch die Blasluft wird die Membran wie ein Luftballon aufgeblasen und legt sich an der Innenwand der Flasche an. Die zu verdrängende Luft wird über eine entsprechende Entlüftungsmembran im Mündungsbereich des Vorformlings abgelassen. Nach dem Entlüften der Flasche zieht sich die elastische Membran wieder in den Ausgangszustand zurück. Nach dem Blasvorgang kann die immer noch sterile Flasche zum Füller transportiert werden. Im Füller kann das Mittel abgenommen werden und bei Bedarf wieder einer Aufbereitung und erneuten Verwendung zugeführt werden.

Zur Durchführung des erfindungsgemäßen Verfahrens ist eine Spritzgießmaschine zur Herstellung der Vorformlinge vorgesehen. Ferner ist eine Einheit zur Durchführung des Applikationsschritts für das Mittel erforderlich. Daran schließt sich zumindest eine Vorrichtung zur Herstellung von Behältern mit einem Ofen und einem Blasrad einer Streckblasmaschine an. Der Vorrichtung zur Herstellung von Behältern kann mindestens eine Verarbeitungseinrichtung nachgeschaltet sein. Bevorzugter Weise ist die Verarbeitungseinrichtung als Füllerkarussell ausgebildet, mit dem die Behälter in entsprechender Weise befüllt werden.

Im Folgenden sollen Ausführungsbeispiele die Erfindung und ihre Vorteile anhand der beigefügten Figuren näher erläutern.
- Figur 1: zeigt eine schematische Darstellung einer Vorrichtung, insbesondere einer Blasmaschine, die aus einem Blasrad besteht, das mit einem Ofen verbunden ist, wobei dem Blasrad die Vorformlinge mit einer definierten Temperatur zugeführt werden.
- Figur 2: zeigt eine schematische Darstellung eines Vorformlings auf dessen Mündung direkt ein Mittel zum Verschließen des Vorformlings aufgesetzt ist.
- Figur 3: zeigt eine weitere Ausführungsform des Mittels zum Verschließen des Vorformlings.
- Figur 4: zeigt eine schematische Darstellung einer weiteren Ausführungsform eines Vorformlings, der mit einem Mittel versehen ist, das den Innenraum des Vorformlings gegenüber Verschmutzung bzw. Rekontaminierung schützt.
- Figur 5: zeigt eine Ausführungsform des erfindungsgemäßen Vorformlings, wobei der Vorformling mit einer Membran verschlossen ist.
- Figur 6: zeigt eine Ausführungsform des Vorformlings, wobei dieser mit einem Dom verschlossen ist.
- Figur 7: zeigt eine Ausführungsform des Vorformlings, der zur Einhaltung von Reinraumbedingungen im Inneren des Vorformlings mittels einer Hülle komplett umschlossen ist.
- Figur 8: zeigt eine Ausführungsform des Herstellungsverfahrens von Behältern aus den Vorformlingen, die mit dem Mittel zum Einhalten von Reinraumbedingungen im Inneren des Vorformlings versehen sind.
- Figur 9a: zeigt eine weitere Möglichkeit der Herstellung von Behältern mit dem erfindungsgemäßen Mittel zur Einhaltung von Reinraumbedingungen im Inneren des Vorformlings.
- Figur 9b: zeigt einen Behälter gemäß der in Figur 7a beschriebenen Möglichkeit zur Herstellung von Behältern, wobei der Herstellungsprozess noch nicht vollständig abgeschlossen ist.
- Figur 10: zeigt eine erste Ausführungsform zum erfindungsgemäßen Handhaben der Vorformlinge.
- Figur 11: zeigt eine weitere Ausführungsform zur Handhabung der erfindungsgemäßen Vorformlinge, welche mit einem Mittel zur Aufrechterhaltung von Reinraumbedingungen im Inneren der Vorformlinge, bzw. der herzustellenden Behälter, versehen sind.
- Figur 12a und 12b: zeigen eine schematische Darstellung des Ablaufs der Herstellung von Behältern und der Handhabung der erfindungsgemäßen Vorformlinge hierzu.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

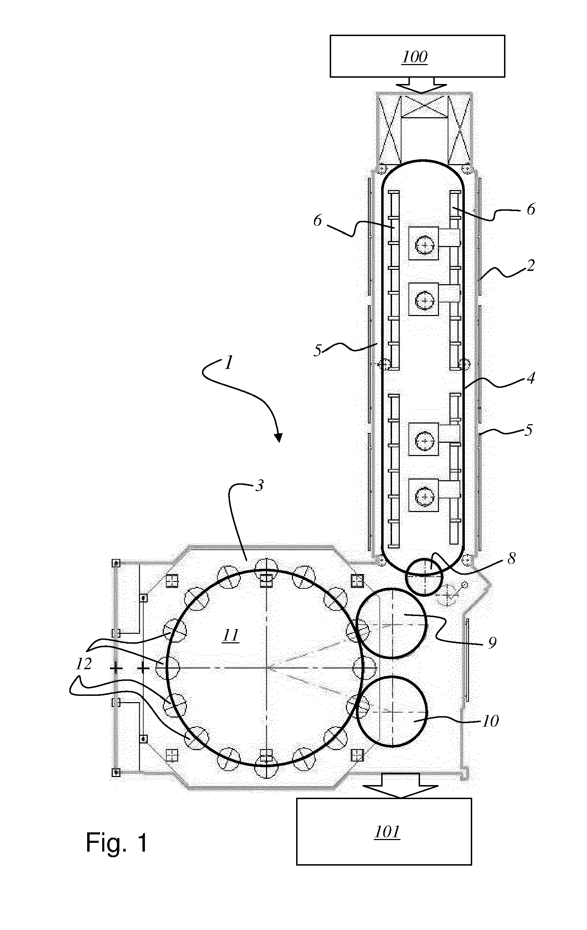

**Figur 1** zeigt eine schematische Ansicht einer Vorrichtung 1, mit der Behälter (nicht dargestellt), bspw. Kunststoffflaschen, im Wesentlichen durch ein Streckblasverfahren hergestellt werden können. Die Vorrichtung 1 besteht im Wesentlichen aus einem Ofen 2 (bzw. einer thermischen Konditionierungseinrichtung), in dem die Vorformlinge (nicht dargestellt) für die herzustellenden Behälter auf eine bestimmte Temperatur gebracht werden, damit aus diesen Vorformlingen die Behälter mit einem Blasverfahren, beziehungsweise Streckblasverfahren, hergestellt werden können. Mit dem Ofen 2 ist das Blasrad 3 einer Streckblasmaschine verbunden. In dem Ofen 2 ist eine Fördereinrichtung 4 vorgesehen, die eine Vielzahl von Vorformlingen an einer Heizeinrichtung 5 vorbeiführt. Zum Inneren des Ofens 2 hin ist die Transporteinrichtung 4 mittels Wärme reflektierenden Kacheln 6 abgeschirmt. Die im Ofen 2 erwärmten Vorformlinge werden an ein Ausgabeelement 8 übergeben. Vom Ausgabeelement 8 werden die erwärmten Vorformlinge an ein Eingabeelement 9 für das Blasrad 3 übergeben.

In der in Figur 1 gezeigten Darstellung umfasst das Blasrad 3 eine Transporteinrichtung 11, an der eine Vielzahl von Formenträgern 12 angeordnet ist. In der hier gezeigten schematischen Darstellung des Blasrads 3 ist die Transporteinrichtung 11 als ein Rad ausgebildet.

Von einem Ausgabeelement 10 des Blasrads 3 werden die fertigen Behälter zu mindestens einer weiteren Verarbeitungseinrichtung 101, beispielsweise einem Füller, ausgegeben. Der Vorrichtung 1 zur Herstellung der Behälter kann eine Spritzgießmaschine 100 vorgeschaltet sein, so dass direkt nach dem Spritzgießvorgang die Vorformlinge in den Ofen 2 eingebracht werden.

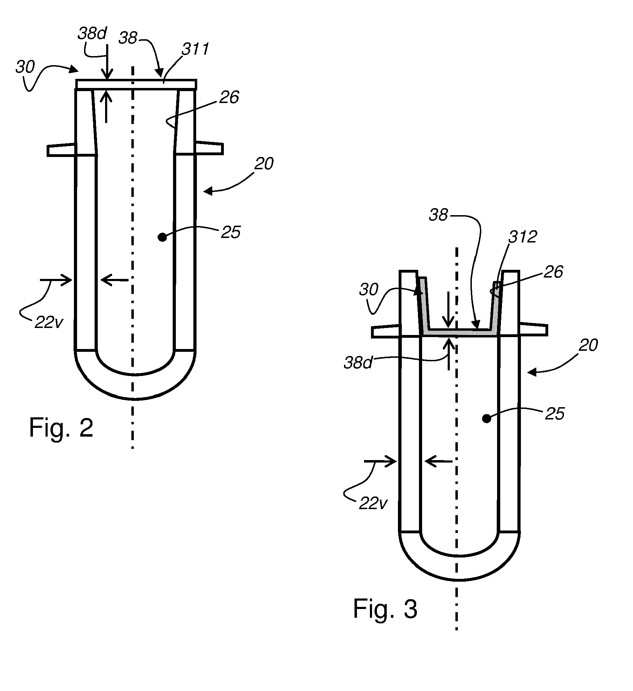

**Figur 2** zeigt einen Vorformling 20, der mit einem Mittel 30 versehen ist, das den Vorformling 20 an der Mündung 26 verschließt. Das Mittel 30 ist das Siegel 38 selbst und ist in dieser Ausführungsform eine Folie 311 oder Platte, die direkt auf der Mündung 26 aufgebracht ist. Somit liegen im Innenraum 25 des Vorformlings 20 Reinraumbedingungen vor. Vorzugsweise ist eine Wandstärke 22v des Vorformlings 20 größer als eine Wandstärke 38d des Siegels 38. Die Wandstärken 22v, 38d sind jeweils durch zwei zueinander gerichtete Pfeile dargestellt, zwischen denen jeweils eine Lücke die Wandstärke 22v bzw. 38d darstellt. Das Siegel 38 bzw. die Folie 311 oder Platte wird erst kurz vorher oder bereits in der Blasmaschine geöffnet. Das Mittel 30 kann insbesondere aus dem gleichen Material wie der Vorformling 20 bestehen. Das Mittel kann insbesondere bei der Herstellung gleich mit gespritzt werden, nachdem der Vorformling innen entformt wird, sich aber noch in der äußeren Spritzgusskavität befindet.

**Figur 3** zeigt einen Vorformling 20, der mit einem Mittel 30 versehen ist, das den Vorformling 20 an der Mündung 26 verschließt. Das Mittel 30 ist das Siegel 38 selbst und ist in dieser Ausführungsform in die Mündung 26 des Vorformlings 20 eingesetzt. Das Siegel 38 ist als Topf 312 ausgebildet und verschließt somit die Mündung 26 des Vorformlings 20. Auch hier ist es empfehlenswert, wenn die Wandstärke 38d des Siegels 38 kleiner ist als die Wandstärke 22v des Vorformlings 20. Selbstverständlich kann der Topf 312 auch als Kappe über die Mündung 26 des Vorformlings 20 gestülpt sein.

Das an der Mündung 26 des Vorformlings 20 sitzende Siegel 38 kann aus unterschiedlichen Werkstoffen bestehen. In den meisten Fällen ist das Siegel 38 aus dem gleichen Material wie der Vorformling 20, also PET oder PP, selbst. Ebenso kann das Siegel 38, wie z. B. eine Folie oder Kappe, aus Metall (insbesonders Aluminium oder Staniol) bestehen. Eine weitere Möglichkeit ist, dass das Siegel 38, wie z. B. eine Folie oder Kappe, aus einem thermoplastischen oder duroplastischen Werkstoff besteht. Im Fall Metall kann das Mittel auch mit einem Magneten aufgebracht bzw. wieder entfernt werden.

Das Siegel 38 (Folie 311, Platte, Topf 312 oder Kappe) kann an der Mündung 26 des Vorformlings 20 nach der Entnahme aus den Formen der Spritzgießmaschine zur Herstellung der Vorformlinge 20 erfolgen. In einem nachgelagerten Produktionsschritt wird das Siegel 38 (Folie 311, Platte, Topf 312 oder Kappe) mit dem Vorformling 20 luftdicht schließend verbunden. Dies erfolgt wenn der Vorformling 20 noch eine Temperatur von über 100 Grad Celsius besitzt. Gemäß einer möglichen Ausführungsform kann dies durch eine Linearmaschine geschehen, bei der das Siegel 38 (Folie 311, Platte, Topf 312 oder Kappe) thermisch verschweißt wird.

Das Siegel 38, welches in Form einer Folie 311 oder einer Platte vorliegt, kann an der Mündung 26 des Vorformlings 20 derart angebracht werden, dass über die gesamte Werkzeugfläche die Folie 311 oder die Platte platziert (z.B. gelegt oder gerollt) wird. Dadurch verbindet sich nur an der Oberkante der Mündung 26 des Vorformlings 20 die Folie 311 oder die Platte mit dem Vorformling 20 und schließt diesen luftdicht ab. Mehrere der Vorformlinge 20 sind über die Folie 311 oder die Platte verbunden und können sodann in einem nachfolgenden Prozessschritt voneinander getrennt werden. Das Siegel 38 kann mittels Kraft- und/oder Formschluss, wie z. B. durch Verschrauben oder Bördeln, angebracht werden. Weitere Befestigungsmöglichkeiten sind Verschweißen durch zusätzliche externe Energieeinbringung, z. B. Wärme, Strahlen, Ultraschall etc., oder Verkleben, oder Verpressen, insbesondere wenn der Vorformling 20 noch eine Temperatur größer als 100 Grad Celsius hat, oder Strecken.

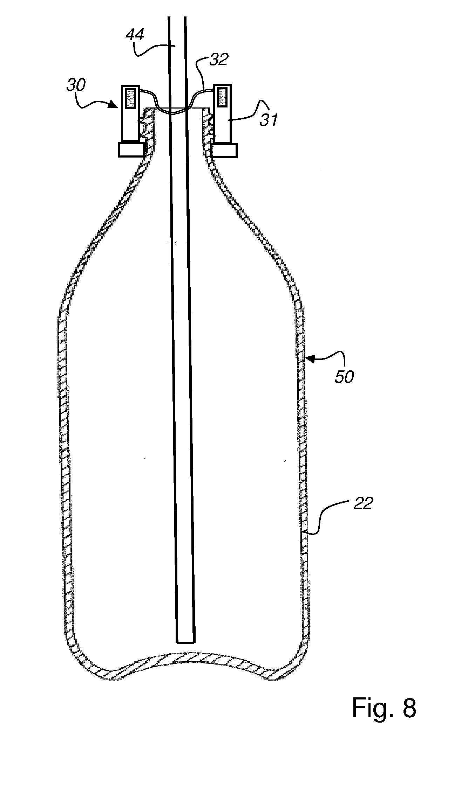

Vor dem Verschließen der Mündung 26 des Vorformlings 20 kann zusätzlich ein Medium (Gasförmiger und/ oder flüssiger und/ oder fester Aggregatzustand) hinzugefügt werden, das aseptische Eigenschaften besitzt. Diese aseptische Eigenschaft kann sowohl aktiv als auch passiv aktiviert sein. Dies ermöglicht die Sicherstellung einer hohen Keim- und Sporenfreiheit im Innenraum 25 wenn das Siegel 38 im Herstellungsprozess geöffnet wird. Die Verminderung von Keimen und Sporen kann im Umfeld des Vorformlings 20, z. B. wenn aus dem Vorformling 20 ein Behälter 50 (siehe Fig. 8) mit nicht steriler Blasluft geblasen wird, und dadurch, dass durch das aseptische Medium die Anzahl von Keimen und/ oder Sporen in der Blasluft vermindert ist, sichergestellt werden. Weiterhin kann das Medium Partikel enthalten, die thermisch, z. B. im Ofen 2 einer Streckblasmaschine, aktiviert/ angeregt werden und zu einer schnelleren Erwärmung des Innenraums 25 des Vorformlings 20 führen.

Beim Herstellungsprozess der Behälter 50 ist es erforderlich, dass das Siegel 38 (Folie 311, Platte, Topf 312 oder Kappe) an der Mündung 26 des Vorformlings 20 geöffnet oder entfernt wird. Zum Öffnen des Vorformlings 20 gibt es mehrere Möglichkeiten, wie z. B. Abschaben; Durchstoßen mittels der Reckstange; Abschrauben; Abziehen mittels Adhäsionskräfte oder Magnet (bei metallischem Siegel 38); Verbrennen wenn Folie 311 einen niedrigeren Flammpunkt als das Material des Vorformlings 20 hat; Abrütteln mittels Ultraschall; Entfernen durch Medien, wie z. B. das Abblasen mittels Luft, Flüssigkeiten, Lösungsmitteln; thermisches Entfernen, wie z. B. Verbrennen, Schmelzen, Verdampfen; Abschmelzen, wobei die Folie 311 schmilzt und sich mit dem Vorformling 20 verbindet (z.B. auf dem Boden des Vorformlings 20 nach dem Recken); Abschneiden mittels Laser, Klinge oder Messer oder Druckbelastung mittels einer Druckerhöhung im Innenraum 25 des Vorformlings 20 z. B. durch eine expansives Gas, das bei Temperaturerhöhung im Ofen 2 zur Ablösung des Siegels 38 führt.

Im gesamten Verfahren zur Herstellung der Behälter 50 kann das Entfernen des Siegels 38 (Folie 311, Platte, Topf 312 oder Kappe) an verschiedensten Stellen der Vorrichtung 1 zur Herstellung von Behältern 50 erfolgen. Dies kann vor der Zuführung der Vorformlinge 20 zur Streckblasmaschine erfolgen. Ebenso kann das Öffnen oder Entfernen des Siegels 38 nach der Zuführung der Vorformlinge 20 zur Streckblasmaschine erfolgen. Weitere Möglichkeiten zur Öffnung oder Entfernung des Siegels 38 bieten sich vor dem Ofen, im Ofen, nach dem Ofen, vor dem Blasmodul, im Blasmodul (während des Blasprozesses, z. B. vor dem Recken), nach dem Blasmodul (wenn Verschluss schon geöffnet ist und Reste zu entfernen sind) an.

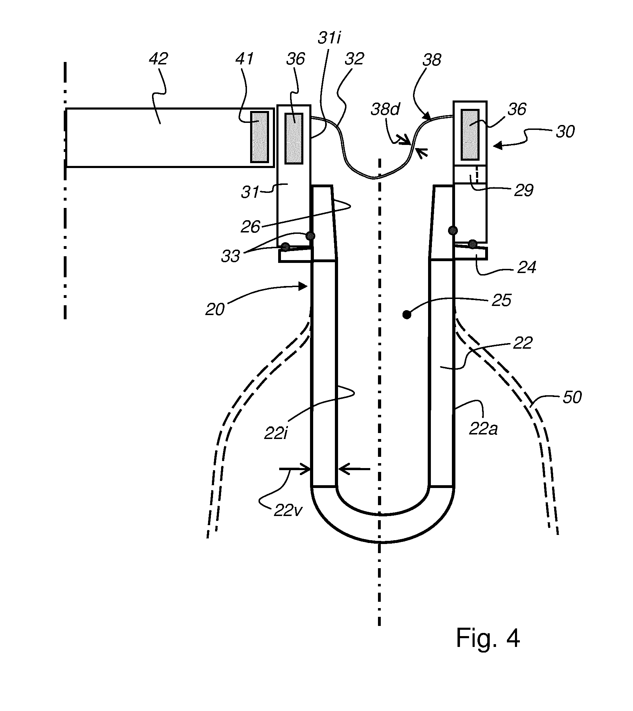

**Figur 4** zeigt einen Vorformling 20, der mit einem Mittel 30 versehen ist, das den Innenraum 25 des Vorformlings 20 in Reinraumbedingungen hält bzw. gegenüber Rekontaminierung schützt. Obwohl in der nachfolgenden Beschreibung Vorformlinge 20 jeweils mit einem Tragring 24 dargestellt sind, soll dies nicht als eine Beschränkung der Erfindung aufgefasst werden. Es ist selbstverständlich, dass die gegenwärtige Erfindung auch bei Vorformlingen 20 verwendet werden kann, die keinen Tragring 24 ausgebildet haben.

Der Vorformling 20 besteht im Wesentlichen aus einem Körper 22, der eine innere Wandung 22i und eine äußere Wandung 22a definiert. Eine Wandstärke 22v des Vorformlings 20 wird letztendlich beim Streckblasvorgang verjüngt. Aus dem Vorformling 20 wird in einem Streckblasverfahren ein Behälter 50 hergestellt, der in Figur 2 nur teilweise durch gestrichelte Linen angedeutet ist.

Gemäß einer Ausführungsform ist das Mittel 30 ein Ring 31, der an der Mündung 26 mit der äußeren Wandung 22a des Vorformlings 20 zusammenwirkt, wobei der Ring 31 ein Siegel 38 trägt, das in Form einer Membran 32 ausgebildet ist, die den Innenraum 25 des Vorformlings 20 verschließt. Die Membran 32 ist bei der Ausführungsform nach Figur 2 im Innenbereich 31 i des Rings 31 angebracht, sie kann aber auch am Außenbereich des Rings 31 angebracht sein (nicht dargestellt). Das Siegel 38 bzw. die Membran 32 besitzt eine Wandstärke 38d, die kleiner als die Wandstärke 22v des Vorformlings 20 ist. Die Wandstärken 22v, 38d sind jeweils durch zwei zueinander gerichtete Pfeile dargestellt, zwischen denen jeweils eine Lücke die Wandstärke 22v bzw. 38d darstellt. Das Siegel 38 bzw. die Membran 32 ist elastisch deformierbar.

Insbesondere kann das Mittel 30 in dem Ring 31 eine Entlüftungsöffnung 29 ausgebildet haben. Über diese Entlüftungsöffnung 29 ist während des Streckblasvorgangs der Vorformlinge 20 bzw. Behälter 50 ein Druckausgleich möglich. Es ist ausgeschlossen, dass über die Entlüftungsöffnung 29 Verunreinigungen aus der Umgebungsluft in den Zwischenraum zwischen der Membran 32 und der inneren Wandung 22i des Vorformlings 20 gelangen.

Durch das Zusammenwirken des Rings 31 mit der äußeren Wandung 22a des Vorformlings 20 und der Membran 32 ist es möglich, den Innenraum 25 des Vorformlings 20 hermetisch abzudichten, so dass die Reinraumbedingungen im Inneren des Vorformlings 20 erhalten bleiben. Zur weiteren Abdichtung des Innenraums 25 des Vorformlings 20 ist der Ring 31 mit mindestens einem zusätzlichen Dichtelement 33 versehen. Der Ring 31 wirkt mit der äußeren Wandung 22a des Vorformlings 20 zusammen und dichtet den Innenraum 25 des Vorformlings 20 zusätzlich mit dem mindestens einen Dichtelement 33 ab, das ebenfalls an der äußeren Wandung 22a des Vorformlings 20 anliegt. Der Ring 31 ist im Bereich der Mündung 26 des Vorformlings 20 angebracht. Das Mittel 30 ist dabei derart auf der Mündung 26 des Vorformlings 20 aufgesetzt, dass weder Teile des Rings 31 noch Teile der Membran 32 mit der inneren Wandung 22i des Vorformlings 20 in Kontakt sind.

In einer bevorzugten Ausführungsform des Mittels 30 sind im Ring 31 mehrere Magneten 36 angeordnet. Die Magneten 36 können mit weiteren Magneten 41 einer Weiterverarbeitungseinheit 42 zusammenwirken. Somit ist es möglich, über das Mittel 30 die Vorformlinge 20 auf einfache und sichere Weise durch die verschiedenen Verarbeitungsmaschinen bzw. Verarbeitungseinheiten zu fördern.

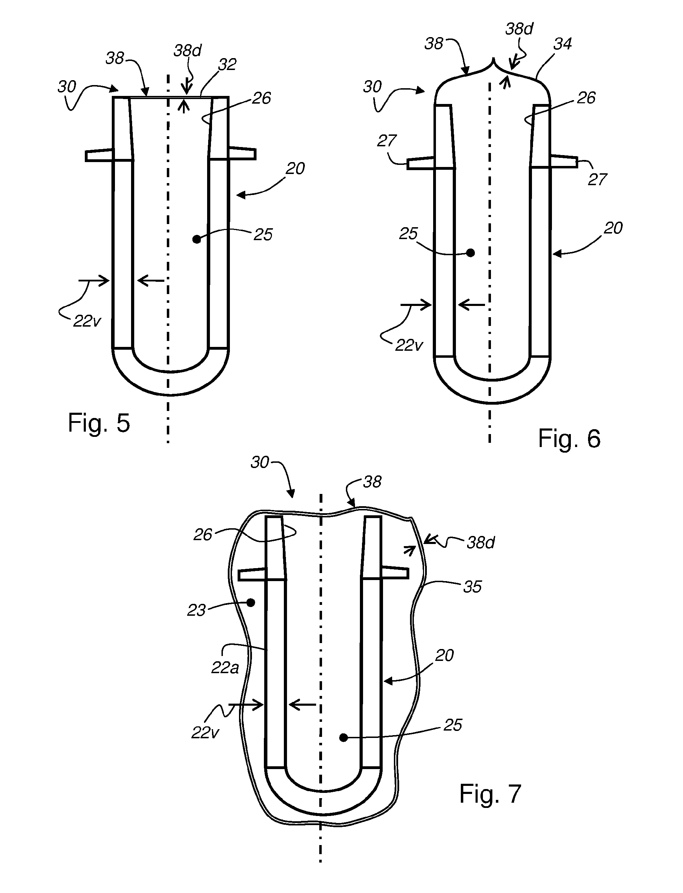

**Figur 5** zeigt eine weitere Ausführungsform des Vorformlings 20. Das Mittel 30, welches für die Reinraumbedingungen im Innenraum 25 des Vorformlings 20 sorgt, ist in dieser Ausführungsform selbst das Siegel 38 und in Form einer Membran 32 gebildet. Diese Membran 32 kann z. B. während des Herstellungsprozesses des Vorformlings 20 mittels eines Zweikomponenten-Spritzgießverfahrens an der Mündung 26 des Vorformlings 20 angebracht werden. Zweikomponenten-Spritzgießverfahren sind hinlänglich aus dem Stand der Technik bekannt, so dass hier nicht näher auf dieses Verfahren eingegangen werden muss. Die Membran 32 ist zumindest teilweise plastisch und/oder elastisch deformierbar oder brechbar.

**Figur 6** zeigt eine weitere Ausführungsform des Vorformlings 20, wobei hier das Mittel 30 zum Erhalt von Reinraumbedingungen im Innenraum 25 des Vorformlings 20 ebenfalls ein Siegel 38 ist, das in Form eines Doms 34 ausgebildet ist. Der Dom 34 besteht beispielsweise aus dem gleichen Material wie der Vorformling 20. Während des Herstellungsprozesses des Vorformlings 20 wird gleichzeitig der Dom 34 ausgebildet. Hierzu sind unterhalb der Mündung 26 des Vorformlings 20 Anspritzpunkte 27 vorgesehen.

In **Figur 7** besteht in einer weiteren Ausführungsform das Mittel 30 zum Schutz des Innenraums 25 des Vorformlings 20 aus einem Siegel 38, das in Form einer Hülle 35 ausgebildet ist, die den Vorformling 20 vollständig umgibt. Zwischen der Hülle 35 und dem Vorformling 20 ist ein Außenraum 23 ausgebildet, der bevorzugt steril ist. Nach dem Herstellen des Vorformlings 20 kann dieser durch Einhaltung von Reinraumbedingungen im Innenraum 25 des Vorformlings 20 in die Hülle 35 verpackt werden. Somit ist sichergestellt, dass während des Transports des Vorformlings 20 keine Verschmutzung des Innenraums 25 stattfindet. Eine erneute Sterilisation des Innenraums 25 des Vorformlings 20 ist somit bei einer Weiterverarbeitung des Vorformlings 20 nicht mehr erforderlich.

Weiterhin ist bei dieser Ausführungsform vorteilhaft, dass nicht nur der Innenraum 25 steril gehalten wird, sondern zudem auch das Gewinde (nicht dargestellt), das sich außerhalb der Mündung 26 befindet, und die äußere Wandung 22a. Dadurch wird verhindert, dass der Vorformling 20 Keime verschleppen kann und er kann schließlich komplett steril aus der Hülle 35 entnommen werden.

**Figur 8** zeigt eine mögliche Ausführungsform des Herstellungsverfahrens von Behältern 50 unter Verwendung des Mittels 30 zum Sichern der Sterilität im Innenraum 25 des Vorformlings 20, wie dieses in Figur 2 gezeigt ist. Die Membran 32 des Mittels 30 wird beim Blasvorgang mit einer bevorzugt sterilen Reckstange 44 durchstoßen. Das Material des Vorformlings 20 wird durch Druck an die Formenträger 12 des Blasrads 3 (siehe Figur 1) gedrängt und so der Behälter 50 ausgeformt. Die Blasluft ist dabei bevorzugt steril, um eine Rekontaminierung des Behälters 50 zu vermeiden. Nachdem der Behälter 50 fertig ausgeformt ist, wird die Reckstange 44 zurückgezogen. Der Behälter 50 kann anschließend mindestens einer Verarbeitungseinrichtung 101 (siehe Fig. 1), die z.B. als ein Füllerkarussell ausgestaltet sein kann, zugeführt werden. Vor der Zuführung des Behälters 50 in das Füllerkarussell 101 ist es erforderlich, dass das Mittel 30 abgenommen wird. Das Mittel 30 kann somit einer Aufbereitung zugeführt werden, wobei die durch die Reckstange 44 durchstoßene Membran 32 durch eine neue Membran 32 ersetzt wird.

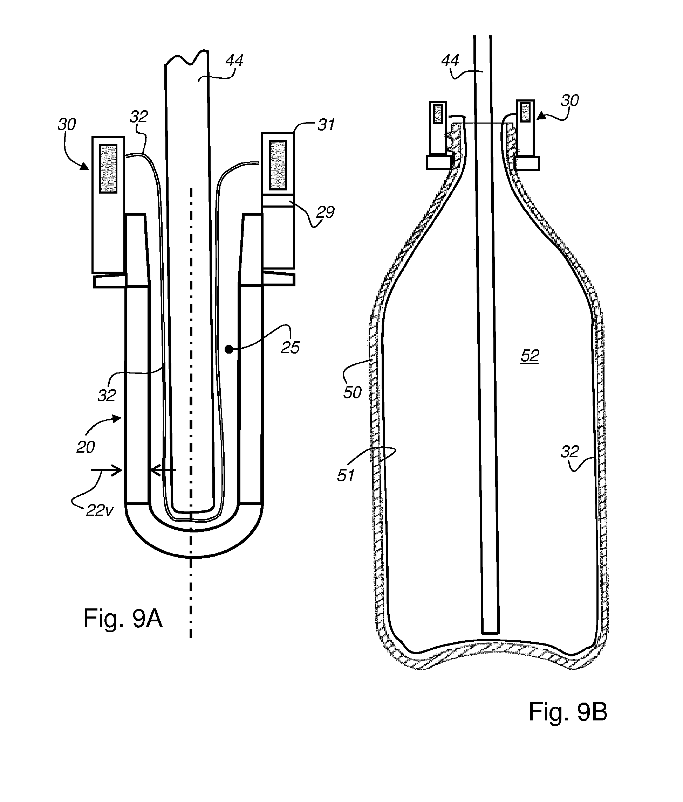

**Figur 9a** und **Figur 9b** zeigen die Anwendung des erfindungsgemäßen Mittels 30 zum Einhalten von Reinraumbedingungen im Innenraum 25 eines Vorformlings 20 bei der Herstellung eines Behälters 50 gemäß einer weiteren Ausführungsform des erfindungsgemäßen Verfahrens. Wie in Figur 9a zu erkennen ist, wird während des Blasvorgangs bzw. vor Einleitung des Blasprozesses des Behälters 50 mit der Reckstange 44 die Membran 32 des Mittels 30 in den Innenraum 25 des Vorformlings 20 hinein deformiert. Der Vorformling 20 ist dabei bereits in den Formenträger 12 des Blasrads 3 (siehe Figur 1) eingesetzt. Beim Blasprozess wird das Material des Vorformlings 20 an die Wandung des Formenträgers 12 gedrückt, so dass letztendlich die gewünschte Form des Behälters 50 erhalten wird. Während dieses Blasprozesses wird die Membran 32 in das Innere 52 des Behälters 50 gezogen. Durch die Blasluft des Blasvorgangs wird die Membran 32 wie ein Luftballon aufgeblasen und liegt an der Behälterkontur 51 an.

Wie in Figur 9a gezeigt, besitzt das Mittel 30 eine Entlüftungsöffnung 29. Diese Entlüftungsöffnung 29 ist in der in Figur 9a und Figur 4 gezeigten Ausführungsform im Ring 31 ausgebildet. Die Entlüftungsöffnung 29 ist dabei derart ausgebildet, dass keine Verunreinigungen in den Zwischenraum zwischen der Membran 32 und der inneren Wandung 22i des Vorformlings 20 gelangen kann. Nachdem der Blasvorgang des Behälters 50 abgeschlossen ist, zieht sich die Membran 32 wieder in ihre Ausgangslage zurück. Das Mittel 30 mit der intakten Membran 32 sitzt somit auf dem fertig geblasenen Behälter 50. Somit kann der fertig geblasene Behälter 50 ebenfalls unter Reinraumbedingungen bzw. unter sterilen Bedingungen im Innenraum 52 des Behälters 50 zu einem Füller transportiert werden.

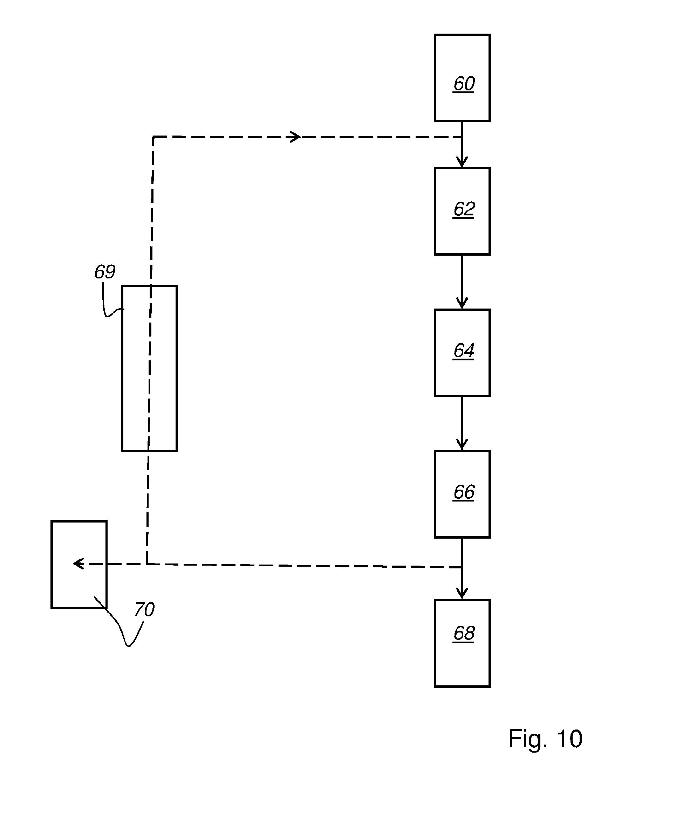

**Figur 10** zeigt eine erste Ausführungsform eines Verfahrens, das es ermöglicht, den Innenraum 25 von Vorformlingen 20 weitestgehend während des gesamten Behandlungsprozesses unter Reinraumbedingungen bzw. sterilen Bedingungen zu halten. Mittels eines Spritzgießverfahrens 60 werden die Vorformlinge 20 hergestellt. In einem nachgeschalteten Applikationsschritt 62 wird der einzelne Vorformling 20 mit dem Mittel 30 versehen, so dass der Innenraum 25 des Vorformlings 20 während einer Erwärmung 64 im Ofen 2 (siehe Figur 1) unter sterilen Bedingungen gehalten werden kann. Nach der Erwärmung werden die Vorformlinge 20 zusammen mit dem Mittel 30 einem Blasvorgang 66 zugeführt. Der Blasvorgang 66 für die Behälter 50 wird dabei im Blasrad 3 (siehe Figur 1) ausgeführt. Nachdem der Blasvorgang 66 für die Behälter 50 abgeschlossen ist, wird das Mittel 30 vom Behälter 50 abgenommen. Die Abnahme des Mittels 30 vom Behälter 50 kann unmittelbar vor der Zuführung 68 des Behälters 50 zu einer Füllmaschine erfolgen. Die abgenommenen Mittel 30 können einer Wiederaufbereitung 69 zugeführt werden. Die aufbereiteten Mittel 30 gelangen nach einer Sterilisation wieder in den Herstellungsprozess zurück und werden nach dem Spritzgießverfahren 60 für die Vorformlinge 20 wieder auf die Vorformlinge 20 aufgesetzt. Eine weitere Möglichkeit ist, dass das Mittel 30 als Einwegartikel ausgestaltet ist. Somit kann das Mittel 30 unmittelbar einem Recycling 70 zugeführt werden.

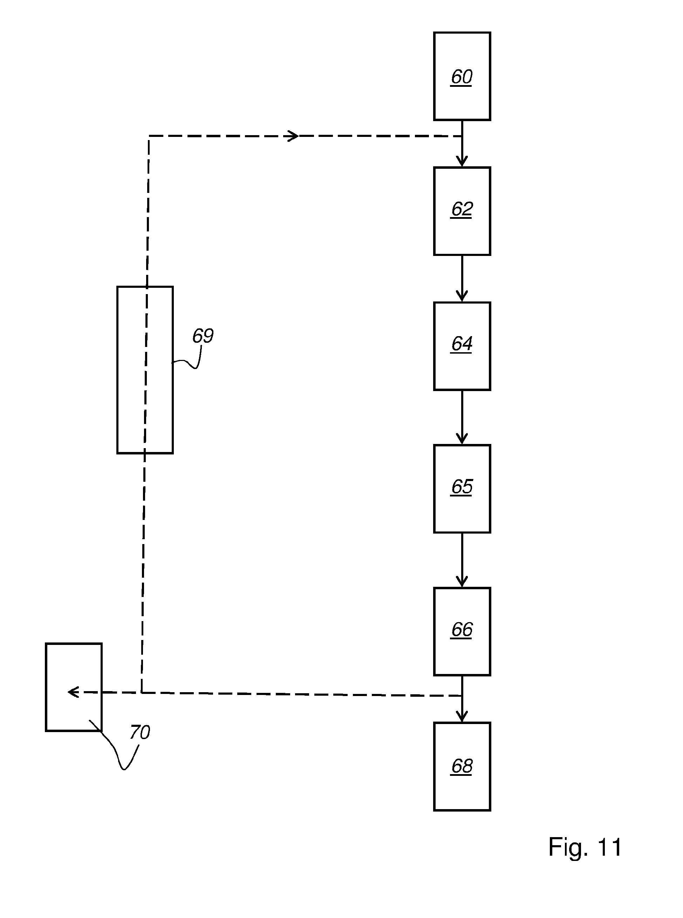

**Figur 11** zeigt das Fließschema einer weiteren Ausführungsform des erfindungsgemäßen Verfahrens. Nach dem Spritzgießverfahren 60 für die Vorformlinge 20 wird das Mittel 30 ebenfalls auf die Vorformlinge 20 im Applikationsschritt 62 aufgesetzt. Mit dem in Figur 9 beschriebenen Verfahren wird die Membran 32 des Mittels 30 durch die Reckstange 44 zerstört. Zwischen dem Erwärmen 64 der Vorformlinge 20 und dem Blasvorgang 66 ist eine Sterilisation 65 der Vorformlinge 20 vorgesehen. Die von den fertig geblasenen Behältern 50 abgenommenen Mittel 30 können im Fall von Einwegartikeln ebenfalls einer Wiederaufbereitung 70 zugeführt werden. Handelt es sich bei dem Mittel 30 nicht um Einwegartikel, werden die Mittel 30 einer Aufbereitung 69 zugeführt. Hier wird z. B. die von der Reckstange 44 zerstörte Membran 32 ersetzt. Bevor die Mittel 30 wieder in den Herstellungsprozess für die Behälter 50 eingeschleust werden, werden die Mittel 30 einer Sterilisation zugeführt.

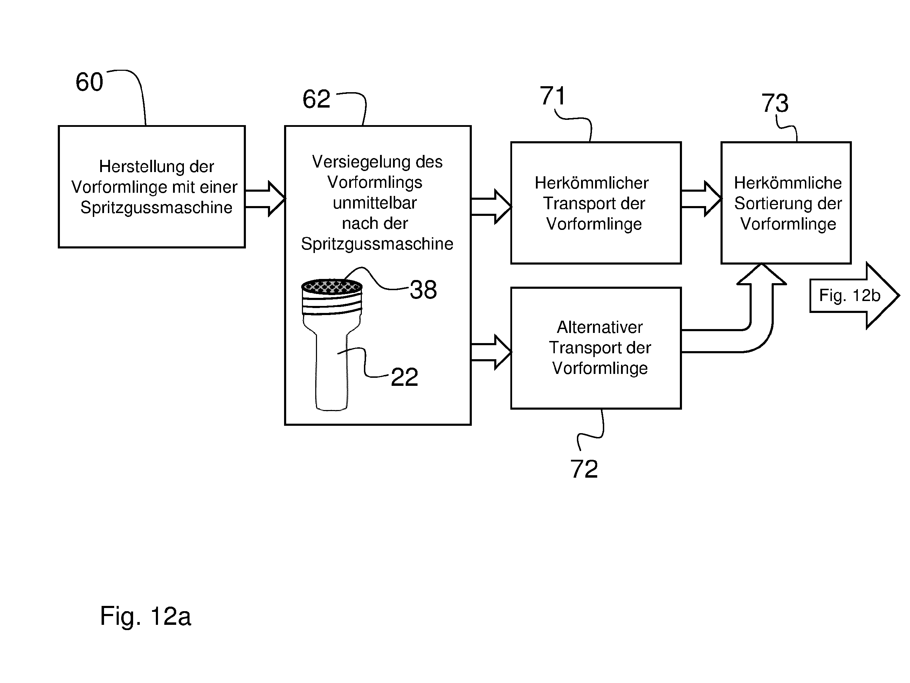

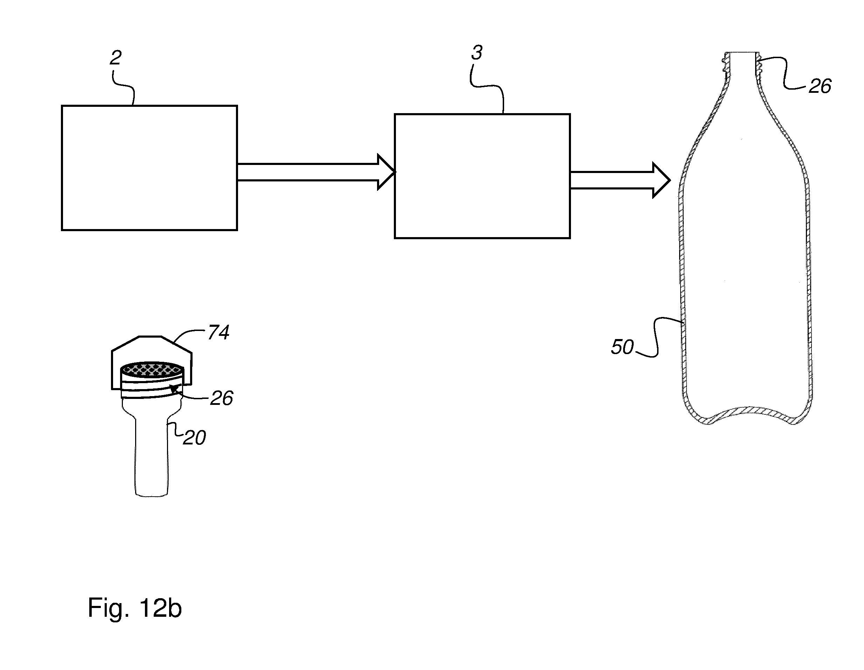

**Figur 12a** und **12b** zeigen eine schematische Darstellung des Ablaufs der Herstellung von Behältern 50 und der Handhabung der erfindungsgemäßen Vorformlinge 20 hierzu. Mit einem Spritzgießverfahren 60 werden die Vorformlinge 20 aus einem entsprechenden Kunststoffgranulat hergestellt. Beim Spritzgießverfahren 60 herrschen Temperaturen von 130°C bis 170°C, so dass der hergestellte Vorformling 20 steril ist. In einem sich an das Spritzgießverfahren 60 anschließenden Applikationsschritt 62 wird der Vorformling 20 mit dem Siegel 38 verschlossen. Das Siegel 38 ist gemäß einer bevorzugten Ausführungsform eine Folie 31, die eine Dicke im µm-Bereich aufweist und aus dem gleichen Material wie der Vorformling 20 besteht. Bevorzugter Weise bestehen die Vorformlinge 20 aus PET. Das Siegel 38 wird direkt auf der Mündung des Vorformlings 20 angebracht, so dass im Innenraum des Vorformlings 20 die Sterilität erhalten bleibt. Die Vorformlinge 20 können auf herkömmliche Weise 71 oder auch in einer sterilen Flüssigkeit 72 transportiert werden. Durch den Transport der Vorformlinge 20 in der sterilen Flüssigkeit 72 ist eine Möglichkeit der Entkeimung der Vorformlinge 20 auch von außen her gegeben. Die Sortierung 73 der Vorformlinge 20 erfolgt ebenfalls auf eine herkömmliche Art und Weise.

Wie in **Figur 12b** dargestellt ist, werden die Vorformlinge 20 nach der Sortierung 73 dem Ofen 2 der Vorrichtung 1 zugeführt, mit der Behälter 50, bspw. Kunststoffflaschen, durch das Streckblasverfahren hergestellt werden können. Ein Greifer 74 wird von außen auf die Mündung 26 des Vorformlings 20 aufgesetzt. Der Greifer 74 ist modular austauschbar, so dass auch andere Typen von Vorformlingen 20 verarbeitet werden können. Mit dem Greifer 74 wir der versiegelte Vorformling 20 in den Ofen 2 übergeführt, um den Vorformling 20 auf die für das Streckblasverfahren erforderliche Temperatur zu bringen. Vom Ofen 2 werden die erwärmten und immer noch mit dem Siegel 38 versehenen Vorformlinge 20 in Formenträger (hier nicht dargestellt) des Blasrades 3 der Streckblasmaschine eingesetzt. Das Siegel 38 des erwärmten Vorformlings 20 wird mittels der Reckstange (hier nicht dargestellt) zerstört und mittels steriler Blasluft wird der Behälter 50 ausgeformt. Das durch die Reckstange zerstörte Siegel 38 legt sich im Bereich der Mündung 26 des Behälters 50 an.

Insbesondere befinden sich die Spritzgussmaschine, die Einrichtung zum Aufbringen des Siegels, die thermische Konditioniereinrichtung, das Blasmodul und der Füller in einem Reinraum. Der Reinraum ist bevorzugt durchgängig ausgestaltet.

Die Erfindung wurde unter Bezugnahme auf bevorzugte Ausführungsformen beschrieben. Es ist jedoch für einen Fachmann vorstellbar, dass Abwandlungen oder Änderungen der Erfindung oder Kombinationen der oben beschriebenen Elemente gemacht werden können, ohne dabei den Schutzbereich der nachstehenden Ansprüche zu verlassen.

## Patentansprüche

1. Vorformling (20), mit einem Körper (22), der eine innere Wandung (22i) und eine äußere Wandung (22a) definiert, und einer Mündung (26), **dadurch gekennzeichnet, dass** der Vorformling (20) beim oder nach dem Herstellungsprozess mit einem Mittel (30) verbindbar ist, dass ein Siegel (38) entsteht, so dass mindestens in einem Innenraum (25) des Vorformlings (20) sterile Bedingungen herrschen.

2. Vorformling (20) nach Anspruch 1, wobei das Mittel (30) ein Ring (31) ist, der an der Mündung (26) mit der äußeren Wandung (22a) des Vorformlings (20) zusammenwirkt, und wobei der Ring (31) das Siegel (38) trägt, das eine Membran (32) ist, die den Innenraum (25) des Vorformlings (20) verschließt.

3. Vorformling (20) Anspruch 2, wobei der Ring (31) zusätzlich mindestens ein Dichtelement (33) besitzt, so dass der Ring (31) gegenüber der äußeren Wandung (22a) des Vorformlings (20) dichtend ist.

4. Vorformling (20) nach den Ansprüchen 2 bis 3, wobei der Ring (31) mindestens einen Magneten (36) umfasst, der mit einem anderen Magneten (41) einer Weiterverarbeitungseinheit (42) für den Vorformling (20) zusammenwirkt.

5. Vorformling (20) nach Anspruch 1, wobei das Mittel (30) selbst ein Siegel (38) ist und in Form einer Folie (311), Membran (32) oder Kappe (312) ausgeformt ist, die die Mündung (26) des Vorformlings (20) verschließt und während des Herstellungsprozesses aufbringbar ist.

6. Vorformling (20) nach den vorangehenden Ansprüchen wobei das Siegel (38) eine Wandstärke (38d) besitzt, die kleiner ist als eine Wandstärke (22v) des Vorformlings (20).

7. Vorformling (20) nach Anspruch 6, wobei das Material des Siegels (38) dem Material des Vorformlings (20) entspricht oder aus Metall ist.

8. Vorformling (20) nach Anspruch 6, wobei das Siegel (38) plastisch und/oder elastisch deformierbar oder brechbar ist.

9. Vorformling (20) nach Anspruch 1, wobei das Mittel (30) ein Siegel (38) ist, das in Form einer Hülle (35) ausgebildet ist, die den Vorformling (20) vollständig umgibt, so dass in dem Innenraum (25) und/oder in einem Außenraum (23) des Vorformlings (20) sterile Bedingungen erhaltbar sind.

10. Vorformling (20) nach Anspruch 9, wobei die Hülle (35) zumindest teilweise Etiketten trägt, die beim Blasvorgang eines Behälters (40) am Behälter (40) anbringbar ist.

11. Verfahren zum Handhaben und Verarbeiten von Vorformlingen (20) mit einem Körper (22), der eine innere Wandung (22i) und eine äußere Wandung (22a) definiert, und einer Mündung (26), **gekennzeichnet durch** die folgenden Schritte:
● Herstellen der Vorformlinge (20) mittels eines Spritzgießverfahrens (60);
● Versehen der Vorformlinge (20) jeweils mit einem Mittel (30) in einem Applikationsschritt (62), so dass mindestens in einem Innenraum (25) des jeweiligen Vorformlings (20) während zumindest einer thermischen Konditionierung der Vorformlinge (20) in einer Konditioniereinheit, insbesondere einem Ofen (2) sterile Bedingungen erhalten werden; und
● Übergeben der Vorformlinge (20) mit den sterilen Bedingungen des Innenraums (25) der Vorformlinge (20) an ein Blasmodul (3), insbesondere ein Blasrad, wobei aus den Vorformlingen (20) sterile Behälter (50) hergestellt werden.

12. Verfahren nach Anspruch 11, wobei das Mittel (30) ein Siegel (38) umfasst, das eine Membran (32) ist, die in einem Ring (31) gehaltert wird und nach dem Herstellen des Vorformlings (20) auf diesen aufgesetzt wird, und wobei der Ring (31) an der äußeren Wandung (22a) des Vorformlings (20) gehaltert wird.

13. Verfahren nach Anspruch 11, wobei das Mittel (30) selbst ein Siegel (38) Siegel (38) ist mit dem während der Herstellung des jeweiligen Vorformlings (20) dieser im Bereich der Mündung (26) verschlossen wird.

14. Verfahren nach den Ansprüchen 12 bis 13, wobei das Siegel vor der Übergabe der Vorformlinge (20) ans das Blasrad (3) der Vorrichtung (1) geöffnet oder entfernt wird.

15. Verfahren nach Anspruch 14, wobei in der Vorrichtung (1) zur Herstellung (66) von Behältern (50) mit einer Reckstange (44) des Blasrads (3) das Siegel (38) durchstoßen wird und aus dem jeweiligen Vorformling (20) der Behälter (50) in einen Formenträger (12) mittels steriler Blasluft geblasen wird.

16. Verfahren nach einem der Ansprüche 11 bis 15, wobei der Vorformling (20) während des Transports durch die thermische Konditionierungseinheit mit einem Aussengreifer transportiert wird.

17. Verfahren nach einem der Ansprüche 11 bis 16, wobei mindestens eine innere Wandung (22a) des Vorformlings (20) nach dessen Herstellung und vor einem Aufbringen des Mittels (30) sterilisiert wird.

18. Verfahren nach einem der Ansprüche 11 bis 17, wobei die steril hergestellten Behälter (50) an eine Füllmaschine (68) übergeben werden.
